# EUROPEAN PATENT APPLICATION

(11) **EP 1 267 546 A2**
(43) Date of publication of application: **18.12.2002**
(21) Application number: 02003823.8
(22) Date of filing: 20.02.2002
(51) Int. Cl.: H04L 29/06

(54) **Method for informing a server whether a user is online**

(30) Priority: 13.06.2001 EP 01114387
(71) Applicant: SIEMENS AKTIENGESELLSCHAFT, 80333 München (DE)
(72) Inventor: Lemke, Michael, Dr., 13156 Berlin (DE)

(57) **Abstract**

Method for informing an internet protocol network application server (16) about whether a communication device (10) of a user is online or not,
wherein during the authentication and authorisation procedure (1,2,5,6) between the communication device (16) and a telecommunication network access server (NAS 12), a message (7) is sent to the internet protocol network application server (16), which message (7) states that the communication device (1) is online (1,6) in the telecommunication network (11,13).

## Description

A variety of Internet-Applications need to know, whether a communication user/partner is available/present/attentive or not. Those applications are especially community services like chat-rooms, multiplayer games servers, instant messaging etc.

Up to now, the users have to pass the authentication and authorisation procedure directly at any dedicated application/community server, usually by providing the respective login procedure. Furthermore, in case of web enabled services the user is expected to accept various cookie settings within its browser environment in order to keep its server/service statuses (statii) available for later use / service re-entry etc. That in turns forces the users to keep a lot of user-name/password pairs hence, 'network identities' in mind or accept foreign, fraud sensitive actions on his particular client environment (for instance PC, PDA).

Another possibility consists in the provisioning of special user client web browser extensions (as e.g. 'Instant Messenger' by AOL), where the clients authentication procedure is coupled with the respective community service (client driven approach). This procedure cannot be generally used, since the browser capabilities presently are wide spread, and a client independent procedure would help.

It is an object of the invention to allow efficient verification of whether a communication device of a user is online in a network. The object is achieved by the invention as described in the independent claims.

Within the Internet availability/attentiveness/presence is identical to being online somehow: I.e. an IP session (for instance a dial up connection, in today's GSM based mobile networks a GPRS packet data protocol context or any other means of internet connectivity with underlying authentication/authorisation procedure) is running.

Hence the access provider (mobile network operator, ISP, ASP), has the unique possibility to provide the start and stop of such sessions to community servers (16) in general, controlled by an extension of the user profile. These community servers could be hosted by the respective service provider in its trusted service environment or by those, the access provider has service level agreements to.

The idea consists in the coupling of the internet access authentication and authorisation procedure (which presently generally uses the Radius protocol, in future Diameter IETF, refer to flow points 1, 2, 3, 4 5, 6 in *picture*) with a new 'online push trigger' mechanism, which is hosted by the Radius / Diameter server.

The solution according to the invention is completely client independent (therefore applicable especially for mobile devices), it allows for centralised user profile self management and it reduces users' 'network identity' variety, since access identity can be shared with the other identities.

The invention consists in enhancing the users' authentication/authorisation profile by general presence profile information (e.g. 'online trigger' for 'community server' refer to 'Subscriber repository' in picture) and enhancing authentication/authorisation instance by push trigger mechanism (sample: Radius as authorisation/authentication instance; trigger mechanism based for instance on XML query, HTTP post mechanism, LDAP-query etc.)

Further details of the invention are set forth in the claims and in the following description of an example.

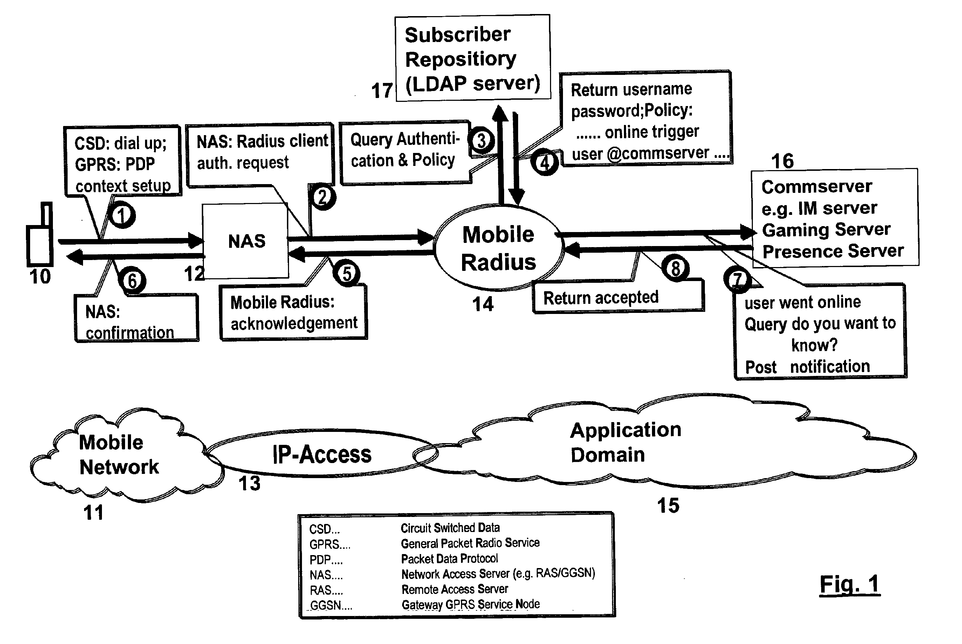

- Figure 1: shows an example of the message flow of an online push trigger scenario.

Figure 1 shows a communication device 10 communicating with a telecommunication network 11. The telecommunication network 11 can be a wireless or fixed network and it can be packet switched (e.g. GPRS) or circuit switched. Here a mobile station 10 communicates with a mobile telecommunication network 11 via an air interface.

The mobile telecommunication network 11 comprises a telecommunication network access server NAS 12 (e.g. a RAS or GGSN server) which (after authentication and authorisation procedures as e.g. circuit-switched-dial-up or GPRS-PDP-context-set-up) grants the mobile device 10 access to the internet protocol telecommunication network 11, 13.

During the authentication and authorisation procedure between the communication device and a telecommunication network access server NAS 12 the telecommunication network access server NAS 12 sends an authentication and authorisation request 2 to an authentication and authorisation server 14, which is acknowledged (5) if the communication device 10 is authenticated and authorised for the telecommunication network 11, 12. Moreover the authentication and authorisation server 14 sends a query 3 to a database server (subscriber repository / LDAP server) 17 which stores a list of communication devices 10 (or equivalently a list of identification modules SIM, WSIM, USIM etc. of communication devices 10) stating whether or not for this communication devices 10 (or module) a message is to be sent to an internet protocol network application server 16 (and to which server 16 the message is to be sent), which message states that the user is online in the telecommunication network.

The database server 17 replies (4) whether or not for this communication devices 10 (or module) a message 7 is to be sent.
If a message is to be sent the authorisation server 14 sends a message (7) to the application server 16 stating that the user's device is online.
The message can e.g. be an internet protocol notification (e.g. http-post) or an internet protocol query (e.g. a http-query).
The application server can use the information that the user's device is online for a variety of Internet-Applications, especially community services like chat-rooms, multiplayer games servers, instant messaging, or for informing other users of a fixed or wireless network that the user is online, especially for informing other users who are stored in a list for the user.
Preferably the telecommunication network access server sends a further message to the application server after the user gets offline from the telecommunication network, which is especially useful for updating information for other users about whether the user's device is online or for online games.

Possible transmission protocols for a system according to Figure 1 are for communication 1, 6: Mobile Core Network protocols (#7 signalling: circuit switched call setup, GPRS-PDP-context setting), for 2, 5: PPP/Radius Protocols (IETF 2136, 2865 etc.), for 3, 4: LDAP (IETF) and for 7,6: HTTP (XML, SOAP etc.), LDAP. The message (="online push trigger") is sent as a push message from the telecommunication network access server to the application server.

The abbreviations in figure 1 mean:
- CSD: Circuit Switched Data
- GPRS: General Packet Radio Service
- PDP: Packet Data Protocol
- NAS: Network Access Server (e.g. RAS/GGSN)
- RAS: Remote Access Server
- GGSN: Gateway GPRS Service Node

## Claims

1. Method for informing an internet protocol network application server (16) about whether a communication device (10) of a user is online or not,
wherein during the authentication and authorisation procedure (1,2,5,6) between the communication device (16) and a telecommunication network access server (NAS 12), a message (7) is sent to the internet protocol network application server (16), which message (7) states that the communication device (1) is online (1,6) in the telecommunication network (11,13).

2. Method according to claim 1, **characterised in that**
the message (7) is an internet protocol notification, especially a http-post.

3. Method according to claim 1, **characterised in that**
the message (7) is an internet protocol query, especially a http-query or wml-query.

4. Method according to any of the preceding claims, **characterised in that**
the telecommunication network access server (12) sends a further message to the application server (16) when the user gets offline from the telecommunication network.

5. Method according to any of the preceding claims, **characterised in that**
the application server (16) uses the information that the user's device (10) is online for informing other users of a fixed or wireless network that the user's device (10) is online, especially for informing other users who are stored (16) in a list for the user.

6. Method according to any of the preceding claims, **characterised in that** the application server (16) uses the information (7) that the user is online for an online game.

7. Method according to any of the preceding claims, **characterised in that** the communication device (10) is a mobile station for use in a cellular mobile network (11).

8. Method according to any of the preceding claims, **characterised in that**
the communication device (10) is a device for a fixed telecommunication network.

9. Method according to any of the preceding claims, **characterised in that** the communication device (10) is considered to be online by the application server (16) if the authorisation and/ or authentication examination for the telecommunication network grants access to the telecommunication network for the communication device.

10. Method according to any of the preceding claims, **characterised in that**
the telecommunication network access server (12) is a GGSN- server of a GPRS telecommunication network.

11. Method according to any of the preceding claims, **characterised in that**
the telecommunication network access server (12) is a RAS- server of a telecommunication network (11;13).

12. Method according to any of the preceding claims, **characterised in that**
the network access server (12) sends the message (7) to the internet protocol network server (14) only if a stored list states that for this user (10) the message (7) may be sent.

13. Method according to any of the preceding claims, **characterised in that**
the message is sent as a push message from the internet protocol network server (14) to the application server (16).

14. Telecommunication network (11,13) with a telecommunication network access server (12) which telecommunication network access server (12) sends a message (7) to an internet protocol network server (16), when a user's device (10) is online in the telecommunication network (11,13), wherein the message (7) states that the user is online in the telecommunication network (11,13).
